# EUROPÄISCHE PATENTANMELDUNG

(11) **EP 4 417 290 A1**
(43) Veröffentlichungstag der Anmeldung: **21.08.2024**
(21) Anmeldenummer: 24154762.9
(22) Anmeldetag: 30.01.2024
(51) Int. Cl.: B01D 29/23, B01D 29/64, B01D 35/26, D06F 39/10, A47L 15/42

(54) **FILTRATIONSEINRICHTUNG FÜR EIN WASSERFÜHRENDES HAUSHALTSGERÄT**

(30) Priorität: 14.02.2023 DE 102023103570
(71) Anmelder: emz-Hanauer GmbH & Co. KGaA, 92507 Nabburg (DE)
(72) Erfinder: Spießl, Georg, 92540 Altendorf (DE); Signorino, Manfredi, 92442 Wackersdorf (DE); Schemela, Benjamin, 92720 Schwarzenbach (DE)
(74) Vertreter: Hannke, Christian

(57) **Zusammenfassung**

Die Erfindung betrifft eine Filtrationseinrichtung insbesondere zur Filtration von Mikroplastik für ein wasserführendes Haushaltsgerät, wobei die Filtrationseinrichtung ein Gehäuse umfasst, in welchem ein Filterelement angeordnet ist, wobei das Filterelement derart ausgestaltet ist, dass es einen inneren Hohlraum umschließt, welcher mit einem Zuleitungselement fluidisch verbunden ist, wobei ein erstes Abflusselement entlang der Höhenachse Z über dem Filterelement angeordnet ist, wobei ein zweites Abflusselement entlang der Höhenachse Z unter dem Filterelement angeordnet ist.

## Beschreibung

Die Erfindung betrifft eine Filtrationseinrichtung insbesondere zur Filtration von Mikroplastik für ein wasserführendes Haushaltsgerät, wobei die Filtrationseinrichtung ein Gehäuse umfasst. Ferner betrifft die Erfindung ein wasserführendes Haushaltsgerät mit einer Filtrationseinrichtung insbesondere zur Filtration von Mikroplastik.

Als Mikroplastik werden feste, unlösliche, partikuläre und nicht biologisch abbaubare synthetische Stoffe beziehungsweise Kunststoffe bezeichnet. Die Mikroplastikteilchen haben eine Größe im Mikrometer- oder Nanometerbereich. Mikroplastik sind Bestandteile in Waschmitteln, Seifen etc.. Ferner werden bei der Wäsche synthetischer Textilien oder Kleidungsstücke umfassend synthetische Textilanteile in kleinste Synthetik-Fasern gelöst. Die ungefilterten Mikroplastikteilchen und -fasern haben einen erheblichen schädlichen Einfluss auf die Wasserflora und - fauna und damit auch auf den Menschen als Teil der Nahrungskette. Daher sind wasserführende Haushaltsgeräte mit Filtervorrichtungen ausgestattet. Diese sind jedoch oftmals nicht in der Lage die Mikroplastikteilchen und -fasern wirksam zu beseitigen. Effektivere Filter haben dagegen den Nachteil, dass sie schnell verstopfen und somit einen erhebliche Wartungsaufwand verursachen.

Aufgabe der Erfindung ist es eine verbesserte Filtration insbesondere zur Filtration von Mikroplastik für wasserführende Haushaltsgeräte bereitzustellen.

Die Aufgabe wird gelöst durch die Gegenstände der Ansprüche 1 und 9. Die Unteransprüche umfassen bevorzugte Ausführungsformen.

Erfindungsgemäß wird eine Filtrationseinrichtung insbesondere zur Filtration von Mikroplastik für ein wasserführendes Haushaltsgerät bereitgestellt, wobei die Filtrationseinrichtung ein Gehäuse umfasst, in welchem ein Filterelement angeordnet ist, wobei das Filterelement derart ausgestaltet ist, dass es einen inneren Hohlraum umschließt, welcher mit einem Zuleitungselement fluidisch verbunden ist, wobei ein erstes Abflusselement entlang der Höhenachse Z über dem Filterelement angeordnet ist, wobei ein zweites Abflusselement entlang der Höhenachse Z unter dem Filterelement angeordnet ist.

Ein entsprechendes wasserführendes Haushaltsgerät ist insbesondere eine Waschmaschine. Denkbar wäre jedoch auch eine Anwendung bei Wasseraufbereitungsanlagen und professionellen Lösungen. Im Weiteren wird sich ohne Beschränkung auf die Allgemeinheit auf ein Haushaltsgerät in Form einer Waschmaschine beschränkt. Durch eine erfindungsgemäße Ausführung wird eine effektive Filterung von Mikroplastikteilchen und -fasern erreicht.

Nach einer besonders bevorzugten Ausführungsform ist das erste Abflusselement geeignet und dafür vorgesehen lediglich während eines Pumpvorgangs des Haushaltsgeräts das gefilterte Wasser abzuleiten. Vorzugsweise ist das zweite Abflusselement geeignet und dafür vorgesehen lediglich nach Beendigung eines Pumpvorgangs des Haushaltsgeräts das gefilterte Wasser abzuleiten. Während des vorteilhaften Pumpvorgangs tritt das Wasser in die Filtrationseinrichtung und somit in den inneren Hohlraum. Während das Wasser durch das Filterelement tritt, verbleiben die Mikroplastikteilchen- und fasern in dem inneren Hohlraum zurück. Das Wasser tritt entlang der Höhenachse Z nach oben aus dem Filterelement aus und gelangt so zu dem ersten Abflusselement, durch welches es dann aus der Filtrationseinrichtung austritt. Nach Beendigung des Pumpvorgangs tritt kein Wasser oder lediglich eine geringe Menge an Rücklaufwasser in die Filtrationseinrichtung. Durch die Wirkung der Gravitationskraft tritt das verbleibende Wasser entlang der Höhenachse Z nach unten aus dem Filterelement und wird dann durch das zweite Abflusselement aus der Filtrationseinrichtung geleitet. Dabei sammeln sich die gefilterten Mikroplastikteilchen- und fasern innerhalb des Filterelements an einer unteren inneren Oberfläche.

Nach einer weiteren bevorzugten Ausführungsform ist das Filterelement im Wesentlichen hohlzylindrisch ausgebildet. Vorzugsweise weist das Filterelement im Wesentlichen einen kreisförmigen Querschnitt auf. Denkbar wären jedoch auch weitere andersartig ausgebildete Querschnitte beispielsweise elliptisch, quadratisch, rechteckförmig, dreieckig oder eine anderweitige Polygonform. Vorzugsweise weist das Filterelement eine Trägerstruktur auf, an welcher zumindest ein Filtersieb angeordnet ist. Vorteilhafterweise bildet das Filtersieb einen geschlossenen Zylindermantel. Vorteilhafterweise ist die Trägerstruktur als eine Rippenstruktur ausgebildet. Dabei ist es von Vorteil, dass die der Rippenstruktur zugehörigen Rippenelemente an einer äußeren Oberfläche des Filtersiebs angeordnet sind.

Nach einer weiteren bevorzugten Ausführungsform ist innerhalb des inneren Hohlraums ein sich entlang einer Längsachse X erstreckendes inneres Element rotierbar angeordnet. Vorzugsweise kontaktiert das innere Element zumindest abschnittsweise eine innere Oberfläche des zumindest einen Filtersiebs. Vorteilhafterweise werden mittels einer Rotation des inneren Elements gefilterte Mikroplastikteilchen- und fasern gesammelt. Der bevorzugte kreisförmige Querschnitt des Filterelements begünstigt eine Rotation des inneren Elements entlang einer inneren Oberfläche des Filtersiebs.

Nach einer weiteren bevorzugten Ausführungsform umfasst das innere Element zwei sich entlang der Längsachse X erstreckende Winkelelemente. Ferner ist vorzugsweise zwischen den zwei Winkelelementen ein Spalt vorgesehen. Vorzugsweise trennt das innere Element ein inneren Hohlraum in einen oberen Bereich und einen unteren Bereich. Vorteilhafterweise befindet sich während des Pumpvorgangs ein Großteil der Mikroplastikteilchen- und fasern in einem oberen Bereich des inneren Hohlraums. Bei Beendigung des Pumpvorgangs gelangen die Mikroplastikteilchen- und fasern in den unteren Bereich des inneren Hohlraums. Die Ausgestaltung der Winkelelemente stellen vorteilhafterweise eine Art Führung der Mikroplastikteilchen- und fasern zu dem Spalt hin dar. Durch die Ausgestaltung des inneren Elements wird bei einem weiteren Pumpvorgang nur ein geringer Teil aus dem unteren Bereich des inneren Hohlraum diesen wieder verlassen.

Vorteilhafterweise umfasst das innere Element ein Lippenelement, welches eine innere Oberfläche des Filtersiebs kontaktiert. Weiterhin ist es von Vorteil, dass ein erstes äußeres Element des Filterelements rotierbar an dem Gehäuse der Filtrationseinrichtung angeordnet ist. Bevorzugt ist das erste äußere Element derart mit dem inneren Element verbunden, dass dieses mittels des ersten äußeren Elements rotierbar ist. Denkbar wäre hierbei eine vorteilhafte starre Verbindung zwischen dem ersten äußeren Element und dem inneren Element. Die Verbindung kann eine kraft- und/oder formschlüssige oder aber auch eine stoffschlüssige Verbindung sein. Eine Rotationsbewegung des ersten äußeren Elements kann somit auf das innere Element übertragen werden. Durch die vorteilhafte Rotationsbewegung in Zusammenschau mit der Kontaktierung des Lippenelements an der inneren Oberfläche des Filtersiebs werden an dem Filtersieb haftende Mikroplastikteilchen- und fasern entfernt und schlussendlich in einem unteren Bereich des inneren Hohlraums gesammelt.

Nach einer weiteren bevorzugten Ausführungsform ist das Filterelement aus dem Gehäuse entnehmbar. Das Filterelement kann somit vorteilhafterweise zu Reinigungszwecken aus dem Gehäuse entnommen werden. Die vorteilhafterweise in dem unteren Bereich des inneren Hohlraums gesammelten Mikroplastikteilchen- und fasern können somit auf eine einfache Art und Weise aus dem Filterelement entfernt werden. Das Gehäuse der Filtrationseinrichtung umfasst zumindest ein Aufnahmeelement, welches dafür vorgesehen ist, das Filterelement aufzunehmen und zu lagern. Ferner ist ein Verriegelungsmechanismus vorgesehen, welcher das Filterelement in dem Gehäuse der Filtrationseinrichtung fixiert. Vorteilhafterweise ist der Verriegelungsmechanismus zwischen dem äußeren Element des Filterelements und dem Gehäuse der Filtrationseinrichtung vorgesehen.

Nach einer weiteren bevorzugten Ausführungsform ist das innere Element helixartig ausgebildet. Vorteilhafterweise kontaktiert eine äußere Kontaktfläche des helixartig ausgebildeten inneren Elements eine innere Oberfläche des Filtersiebs. Vorzugsweise ist ein zweites äußeres Element an dem Gehäuse angeordnet. Bevorzugt ist das zweite äußere Element becherartig ausgebildet. Vorzugsweise befördert eine Rotation des helixartig ausgebildeten inneren Elements die gefilterten Mikroplastikteilchen- und fasern in das äußere Element. Nach Beendigung des Pumpvorgangs lagern sich die Mikroplastikteilchen- und fasern an der inneren Oberfläche des Filtersiebs ab. Durch die Kontaktierung der äußeren Kontaktfläche des helixartig ausgebildeten inneren Elements mit der inneren Oberfläche des Filtersiebs kann ein Großteil der an dem Filtersieb anlagernden Mikroplastikteilchen- und fasern in das zweite äußere Element befördert werden. Vorzugsweise ist das zweite äußere Element von dem Filterelement und dem Gehäuse der Filtrationseinrichtung entfernbar. Somit kann eine äußerst einfache Art und Weise das Filterelement zu reinigen und zu entleeren bereitgestellt werden.

Nach einer weiteren bevorzugten Ausführungsform ist eine Antriebseinrichtung vorgesehen, mittels welcher die Rotation des helixartig ausgebildeten inneren Elements angetrieben wird. Die Antriebseinrichtung ist mittels einer Übertragungseinrichtung mit dem helixartig ausgebildeten inneren Element wirkverbunden. Die Antriebseinrichtung kann beispielsweise ein Elektromotor sein. Die Übertragungseinrichtung kann beispielsweise ein Getriebe, eine Welle, ein Riemen oder eine ähnlich geeignete Übertagungseinrichtung sein.

Vorteilhafterweise sind das Gehäuse der Filtrationseinrichtung, die Trägerstruktur des Filterelements aus einem Kunststoff gefertigt. Denkbar wäre jedoch auch eine Ausgestaltung aus einem Metall oder einer Metalllegierung. Vorzugsweise besteht das Filtersieb des Filterelements aus mikroporösen und hydrophoben Kunststoff. Das Filtersieb kann als Feststoffkörper oder Matte vorliegen. Denkbar wäre auch eine Ausgestaltung das Filtersiebs als Faservlies.

Die vorliegende Aufgabe der Erfindung wird auch von einem wasserführenden Haushaltsgerät, umfassend zumindest einen Laugenbehälter und zumindest eine Filtrationseinrichtung, nach einem der vorher beschriebenen Ausführungsbespiele, gelöst. Das Haushaltsgerät kann dabei mit allen bereits obig im Rahmen der Filtrationseinrichtung beschriebenen Merkmalen einzeln oder in Kombination miteinander ausgestattet sein und umgekehrt.

Ein solches Haushaltsgerät umfasst vorteilhafterweise ein Gehäuse, in welchem der zumindest eine Laugenbehälter angeordnet ist. Vorzugsweise ist die Filtrationseinrichtung in dem Gehäuse des Haushaltsgeräts angeordnet. Vorzugsweise ist die Filtrationseinrichtung in einem oberen Bereich des Haushaltsgeräts vorgesehen, damit diese für die Entleerung leicht zugänglich ist. Vorzugsweise ist das Haushaltsgerät eine Waschmaschine. Denkbar wäre jedoch auch eine Geschirrspülmaschine. In dem Laugenbehälter werden die zu waschenden Gegenstände eingebracht. Bei dem Waschvorgang wird dann eine Waschflüssigkeit in Form von mit einem Behandlungsmittel versetzten Wasser in den Laugenbehälter eingebracht.

Vorzugsweise umfasst das wasserführende Haushaltsgerät eine Pumpeinrichtung, welche Wasser aus dem Laugenbehälter zu der zumindest einen Filtrationseinrichtung befördert. Nach oder während des Waschvorgangs wird somit das Abwasser mittels der Pumpeinrichtung aus dem Laugenbehälter gepumpt. Vorteilhafterweise ist das erste Abflusselement fluidisch mit dem Abfluss des wasserführenden Haushaltsgeräts verbunden. Denkbar wäre auch, dass das erste Abflusselement mit dem Laugenbehälter des Haushaltsgeräts verbunden ist. Das Abführen des gefilterten Wassers aus dem ersten Abflusselement erfolgt mittels der Pumpeinrichtung. Vorzugsweise ist das zweite Abflusselement über eine Bypassleitung mit einem Abfluss des wasserführenden Haushaltsgeräts verbunden. Vorteilhafterweise ist in dem zweiten Abflusselement und/oder in der Bypassleitung eine Zusatzpumpeinrichtung vorgesehen, mittels welcher das Wasser aus dem zweiten Abflusselement beziehungsweise dem Filterelement beziehungsweise der Filtrationseinrichtung förderbar ist.

Weiterhin ist es von Vorteil, dass das wasserführende Haushaltsgerät eine Steuerungseinrichtung umfasst, welche die Filtrationseinrichtung steuert. Vorzugsweise steuert die Steuerungseinrichtung auch weitere Funktionen des Haushaltsgeräts. Vorzugsweise steuert die Steuerungseinrichtung die Antriebseinrichtung der Filtrationseinrichtung. Vorteilhafterweise kann nach Beendigung des Pumpvorgangs die Antriebseinrichtung aktiviert werden, so dass die gefilterten Mikroplastikteilchen- und fasern in das zweite äußere Element befördert werden. Vor dem nächsten Pumpvorgang sind die gefilterten Mikroplastikteilchen- und fasern somit von dem Filtersieb entfernt.

Vorteilhafterweise ist während des Pumpvorgangs der Pumpeinrichtung die Zusatzpumpvorrichtung nicht aktiviert, so dass über das zweite Abflusselement kein Wasser abgeleitet werden kann. Das gefilterte Wasser wird demnach vorteilhafterweise während des Pumpvorgangs lediglich über das erste Abflusselement abgeleitet. Nach Beendigung des Pumpvorgangs der Pumpeinrichtung wird die Zusatzpumpeinrichtung aktiviert. Somit kann nach Beendigung des Pumpvorgangs vorteilhafterweise das gefilterte Wasser lediglich über das zweite Abflusselement abgeleitet werden, da ein Abfließen über das erste Abflusselement nicht mehr erfolgt.

Nach einer weiteren bevorzugten Ausführungsform ist zumindest eine erste Sensoreinrichtung vorgesehen, mittels welcher ein Entleerungserfordernis des Filterelements detektierbar ist. Bevorzugt ist zumindest eine erste Sensoreinrichtung signaltechnisch mit der Steuerungseinrichtung verbunden. Vorzugsweise übermittelt die Steuerungseinrichtung ein Signal an eine Hinweisvorrichtung. Die Hinweisvorrichtung kann eine optische Hinweisvorrichtung, beispielsweise eine Leuchte oder eine akustische Hinweisvorrichtung, sein.

Nach einer weiteren bevorzugten Ausführungsform ist die erste Sensoreinrichtung zumindest einen Sensor umfassend, welcher einen verminderten Durchfluss durch das Filterelement detektiert. Hierzu könnte vorzugsweise ein Sensor vorgesehen sein, mittels welchem eine Wasserstandserfassung vorzugsweise in dem zweiten Filterelement ermöglicht ist. Alternativ oder kumulativ kann ein Sensor vorgesehen sein, welcher einen Differenzdruck zwischen dem Zuleitungselement und dem ersten und/oder dem zweiten Abflusselement detektiert. Alternativ oder kumulativ kann ein Sensor vorgesehen sein, welcher den Durchfluss aus dem zweiten Abflusselement detektiert. Vorzugsweise liegt bei Unterschreiten eines Schwellwerts des Durchflusses das Entleerungserfordernis vor. Denkbar sind jedoch auch noch anderweitige Sensoren, welche das Entleerungserfordernis detektieren können. So könnte ein bevorzugter Sensor ein optischer Sensor sein, welcher das Vorhandensein einer gewissen Menge an Mikroplastikteilchen oder - fasern in dem Filterelement detektieren kann.

Nach einer weiteren bevorzugten Ausführungsform ist eine zweite Sensoreinrichtung vorgesehen, welche den Öffnungszustand des Filterelements detektiert. Vorzugsweise unterbindet die Steuerungseinrichtung einen Start eines Waschprogramms, solange das Filterelement nicht geschlossen ist. Hierdurch wird sichergestellt, dass ein Waschvorgang lediglich mit einer entsprechenden Filterung erfolgen kann.

Weitere Vorteile, Ziele und Eigenschaften der vorliegenden Erfindung werden anhand nachfolgender Beschreibungen der anliegenden Figuren erläutert. Gleichartige Komponenten können in den verschiedenen Ausführungsformen gleiche Bezugszeichen aufweisen.

In den Figuren zeigen:
- Fig.1a, 1b: eine perspektivische Ansicht einer Filtrationseinrichtung nach einer Ausführungsform;
- Fig.2: eine Seitenansicht einer Filtrationseinrichtung nach einer Ausführungsform;
- Fig.3a: eine Draufsicht einer Filtrationseinrichtung nach einer Ausführungsform von vorn;
- Fig.3b: eine Draufsicht einer Filtrationseinrichtung nach einer Ausführungsform von hinten;
- Fig.4: eine perspektivische Ansicht eines Filterelements nach einer Ausführungsform;
- Fig.5: eine Seitenansicht eines Filterelements nach einer Ausführungsform;
- Fig.6: eine Schnittansicht eines Filterelements nach einer Ausführungsform;
- Fig.7: eine seitliche Schnittansicht einer Filtrationseinrichtung nach einer Ausführungsform;
- Fig.8: eine Schnittansicht einer Filtrationseinrichtung nach einer Ausführungsform;
- Fig.9a-9e: verschiedene Ansichten eines inneren Elements nach einer Ausführungsform
- Fig.10: eine Schnittansicht einer Filtrationseinrichtung nach einer Ausführungsform;
- Fig.11a, 11b: Schnittansichten einer Filtrationseinrichtung nach einer Ausführungsform;
- Fig.12: eine perspektivische Ansicht einer Filtrationseinrichtung nach einer Ausführungsform;
- Fig.13: eine Draufsicht einer Filtrationseinrichtung nach einer Ausführungsform;
- Fig.14: eine seitliche Schnittansicht einer Filtrationseinrichtung nach einer Ausführungsform;
- Fig.15: eine perspektivische Ansicht eines inneren Elements nach einer Ausführungsform;
- Fig.16: eine Seitenansicht eines inneren Elements nach einer Ausführungsform;
- Fig.17: eine seitliche Schnittansicht einer Filtrationseinrichtung nach einer Ausführungsform;
- Fig.18: eine seitliche Schnittansicht einer Filtrationseinrichtung nach einer Ausführungsform;
- Fig.19: Haushaltsgerät umfassend zumindest eine Luftaufbereitungsvorrichtung nach einer Ausführungsform;
- Fig.20a; 20b: eine Prinzipschaltskizze.

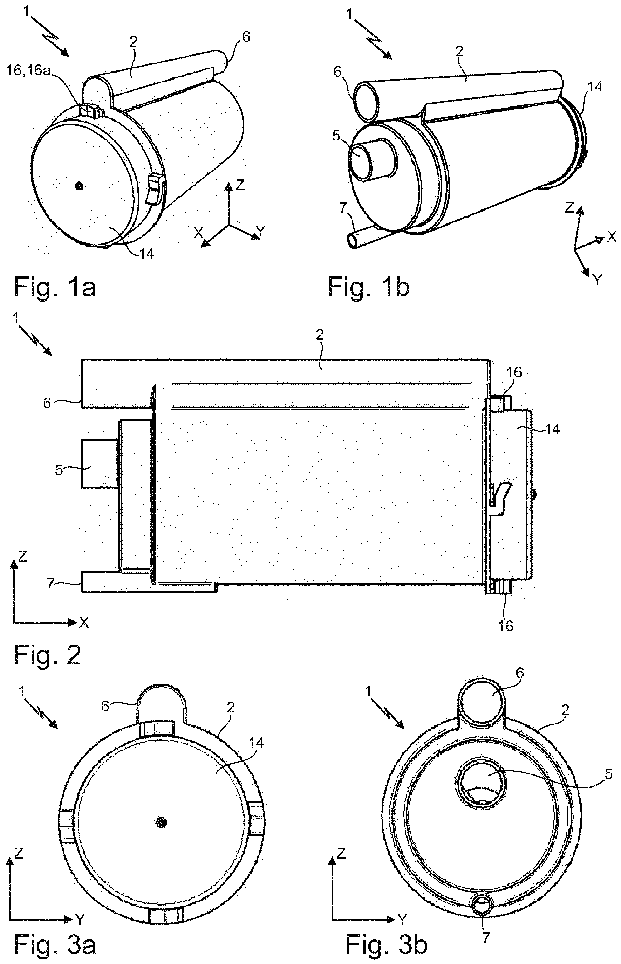

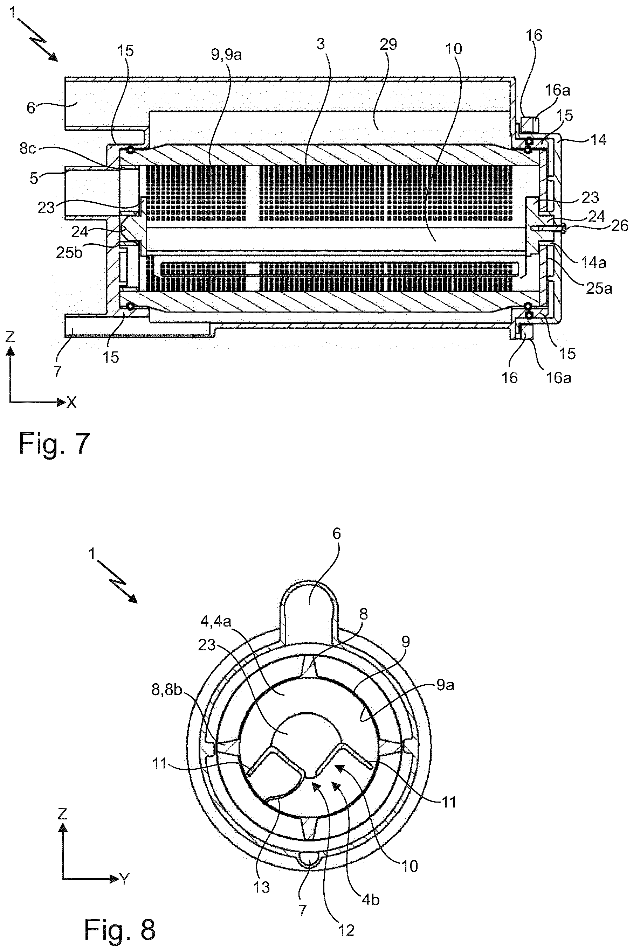

In den Figuren 1 bis 7 ist eine Filtrationseinrichtung 1 insbesondere zur Filtration von Mikroplastik für ein wasserführendes Haushaltsgerät 100 dargestellt. Die Filtrationseinrichtung 1 umfasst ein Gehäuse 2, in welchem ein Filterelement 3 angeordnet ist, wobei das Filterelement 3 derart ausgestaltet ist, dass es einen inneren Hohlraum 4 umschließt, welcher mit einem Zuleitungselement 5 fluidisch verbunden ist, wobei ein erstes Abflusselement 6 entlang der Höhenachse Z über dem Filterelement 3 angeordnet ist, wobei ein zweites Abflusselement 7 entlang der Höhenachse Z unter dem Filterelement 3 angeordnet ist.

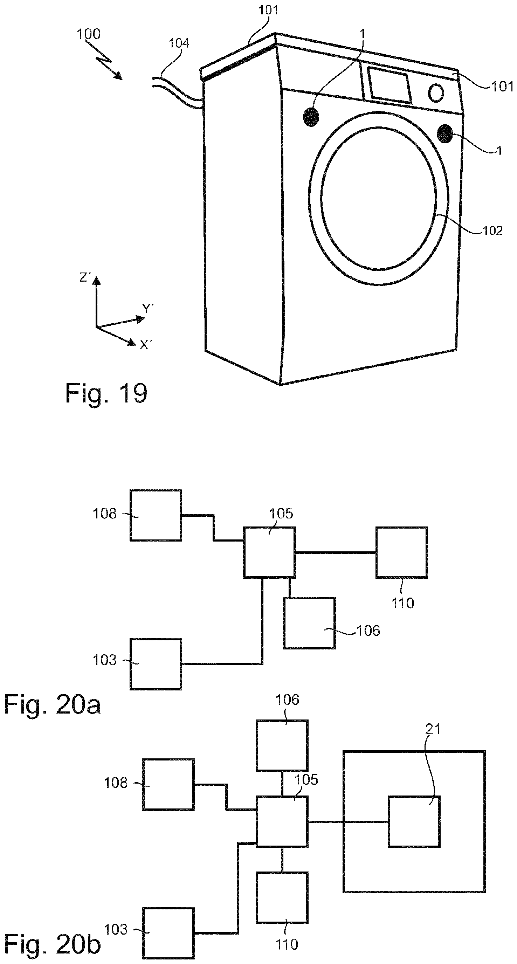

Die Filtrationseinrichtung 1 erstreckt sich entlang einer Höhenachse Z, einer Längsachse X und einer Breitenachse Y. In Figur 19 ist ein Haushaltsgerät 100 dargestellt. Dieses erstreckt sich entlang einer Höhenachse Z`, einer Längsachse X' und einer Breitenachse Y`.

Die Filtrationseinrichtung 1 umfasst ein Gehäuse 2. Dieses ist im Wesentlichen kreiszylinderförmig ausgebildet. Die Ausgestaltung der Form des Gehäuses 2 soll jedoch keine Einschränkung der Allgemeinheit darstellen. Da die Filtrationseinrichtung 1 innerhalb des Haushaltsgeräts 100 angeordnet ist, kann die Form des Gehäuses 2 der Filtrationseinrichtung 1 an die jeweiligen Gegebenheiten des Haushaltsgeräts 100 angepasst werden.

Das Gehäuse 2 der Filtrationseinrichtung 1 erstreckt sich entlang einer Höhenachse Z. Ferner ist ein Zuleitungselement 5 vorgesehen, welches entlang der Höhenachse Z zwischen dem ersten Abflusselement 6 und dem zweiten Abflusselement 7 angeordnet ist. Das Zuleitungselement 5 kann in dem Gehäuse 2 integriert sein oder daran angeordnet sein. Ferner ist es dazu geeignet und dafür vorgesehen, dass eine Zuleitung 5, beispielsweise in Form eines Schlauches oder Rohres daran angeordnet werden kann. Sowohl das erste Abflusselement 6 als auch das zweite Abflusselement 7 können in dem Gehäuse 2 integriert sein oder daran angeordnet sein. Ferner sind diese dazu geeignet und dafür vorgesehen, dass jeweils eine Ableitung, beispielsweise in Form eines Schlauches oder Rohres daran angeordnet werden kann. In Figur 3b ist ersichtlich, dass das erste Abflusselement 6 und das zweite Abflusselement 7 diametral gegenüberliegend sind.

Das erste Abflusselement 6 ist geeignet und dafür vorgesehen lediglich während eines Pumpvorgangs des Haushaltsgeräts 100 das gefilterte Wasser abzuleiten. Das zweite Abflusselement 7 ist geeignet und dafür vorgesehen lediglich nach Beendigung eines Pumpvorgangs des Haushaltsgeräts 100 das gefilterte Wasser abzuleiten. Hierzu ist eine Zusatzpumpeinrichtung 108 vorgesehen, mittels welcher das Wasser aus dem zweiten Abflusselement 7 beziehungsweise dem Filterelement 3 beziehungsweise der Filtrationseinrichtung 1 förderbar ist.

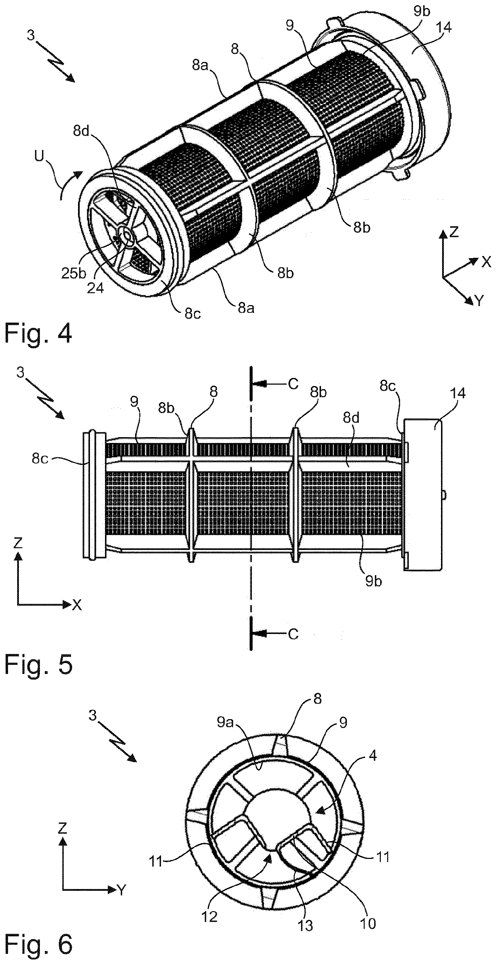

Das erste Filterelement 3 ist im Wesentlichen hohlzylindrisch ausgebildet. Nach der vorliegenden dargestellten Ausführungsform weist das erste Filterelement 3 einen im Wesentlichen kreisförmigen Querschnitt auf. Denkbar wäre jedoch auch anderweitig ausgebildete Querschnitte, beispielsweise elliptisch oder polygonförmig. Das erste Filterelement 3 weist eine Trägerstruktur 8 auf, an welcher zumindest ein Filtersieb 9 angeordnet ist. Durch die hohlzylindrische Ausgestaltung wird auch der innere Hohlraum 4 definiert. In den Figuren 5 und 6 ist die Trägerstruktur 8 gut ersichtlich. Die Trägerstruktur 8 umfasst zumindest zwei sich entlang der Längsdachse X erstreckende erste Rippenelemente 8a und zumindest zwei sich entlang einer Umfangsrichtung U erstreckende zweite Rippenelemente 8b. Die ersten Rippenelemente 8a erstrecken sich zwischen zwei an den entlang der Längsachse X angeordneten ringartigen Trägerelementen 8c. Die ersten Rippenelemente 8a und die zweiten Rippenelemente 8b sind an einer äußeren Oberfläche 9b des Filtersiebs 9 angeordnet. Das Filtersieb 9 ist somit radial weiter innen als die ersten Rippenelemente 8a und die zweiten Rippenelemente 8b angeordnet. Die innere Oberfläche 9a des Filtersiebs 9 definiert den inneren Hohlraum 4. In diesen inneren Hohlraum 4 gelangt das zu filternde Wasser aus dem Zuleitungselement 5. Das Wasser tritt durch das Filtersieb 9. Während des Pumpvorgangs tritt das Wasser dann aus dem erste Abflusselement 6 aus der Filtrationseinrichtung 1 hinaus. Nach dem Pumpvorgang tritt das Wasser dann aus dem zweiten Abflusselement 7 aus der Filtrationseinrichtung 1 hinaus.

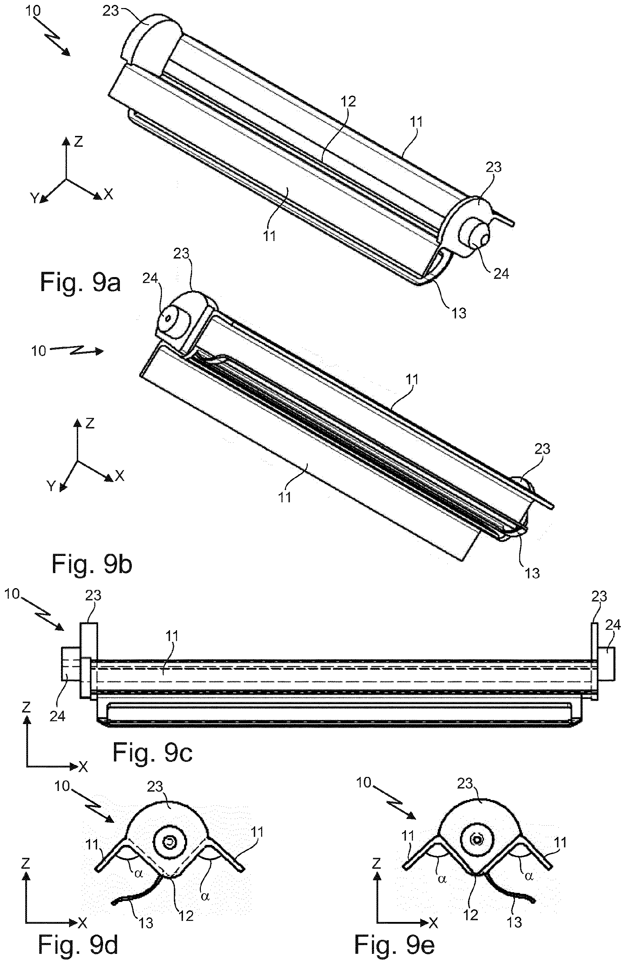

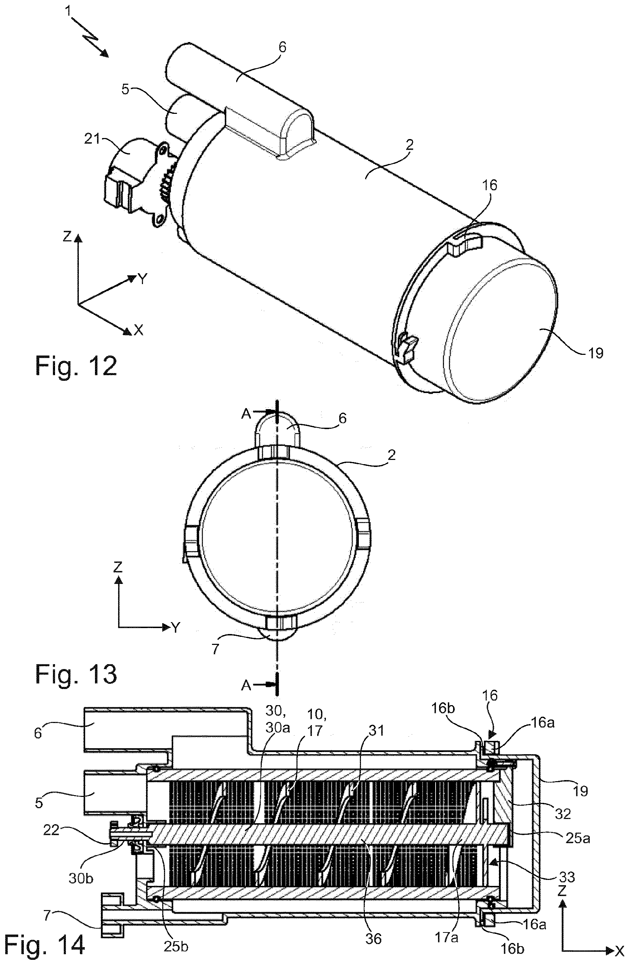

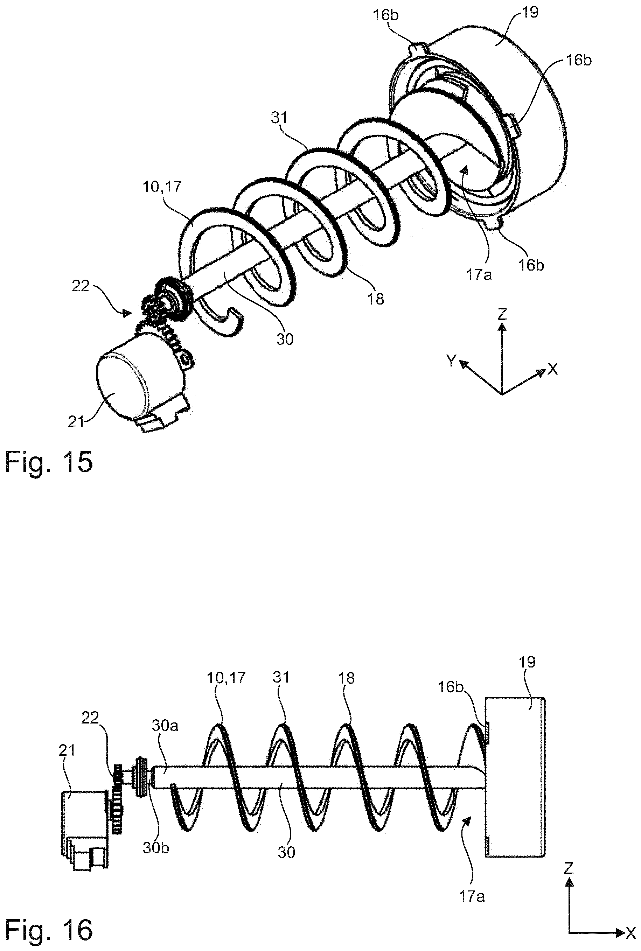

Innerhalb des inneren Hohlraums 4 ist ein sich entlang einer Längsachse X sich erstreckendes inneres Element 10 rotierbar angeordnet, welches zumindest abschnittsweise die innere Oberfläche 9a des zumindest einen Filtersiebs 9 kontaktiert. Mittels einer Rotation des inneren Elements 10 werden gefilterte Mikroplastikteilchen- und fasern 20 gesammelt. Vorliegend sind zwei Ausführungsformen des inneren Elements 10 dargestellt. Die erste Ausführungsform ist in den Figuren 1 bis 11b dargestellt. Die zweiter Ausführungsform ist in den Figuren 12 bis 18 dargestellt.

Nach der ersten Ausführungsform umfasst das innere Element 10 zwei sich entlang der Längsachse X erstreckende Winkelelemente 11. Das innere Element 10 umfasst an seinen entlang der Längsachse X gesehenen Enden jeweils ein Endstück 23. Die beiden Winkelelemente 11 münden jeweils in den Endstücken 23. Die Endstücke 23 sind im Wesentlichen kreissegmentförmig ausgebildet und umfassen jeweils einen Rotationszapfen 24. Die Rotationszapfen 24 sind jeweils in einer Aufnahme 25a, 25b der Trägerstruktur 8 rotierbar angeordnet. Die Aufnahmen 25a, 25b sind jeweils mit den ringartigen Trägerelementen 8c verbunden.

Bei dem entlang der Längsachse X hinteren ringartigen Trägerelement 8c liegt die hintere Aufnahme 25b in der Öffnung des ringartigen Trägerelements 8c. Dabei ist zumindest ein drittes Rippenelement 8d vorgesehen, welches das ringartige Trägerelement 8c mit der hinteren ringartig ausgebildeten Aufnahme 25b verbindet. Vorliegend sind zwei innerhalb der Öffnung des ringartigen Trägerelements 8c kreuzartig angeordnete dritte Rippenelemente 8d vorgesehen. Das Zuleitungselement 5 ist entlang der Höhenachse Z über der hinteren ringartig ausgebildeten Aufnahme 25b angeordnet. Das zu filternde Wasser kann somit ungehindert in den inneren Hohlraum 4 gelangen.

An dem entlang der Längsachse X vorderen ringartigen Trägerelement 8c ist ein scheibenartiges Frontelement 27 angeordnet. Das Frontelement 27 schließt den inneren Hohlraum 4 dichtend ab. Dabei liegt das Frontelement 27 von vorn auf dem ringartigen Trägerelement 8c auf. Die vordere Aufnahme 25a ist dabei als Durchbruch oder Bohrung in dem Frontelement 27 vorgesehen.

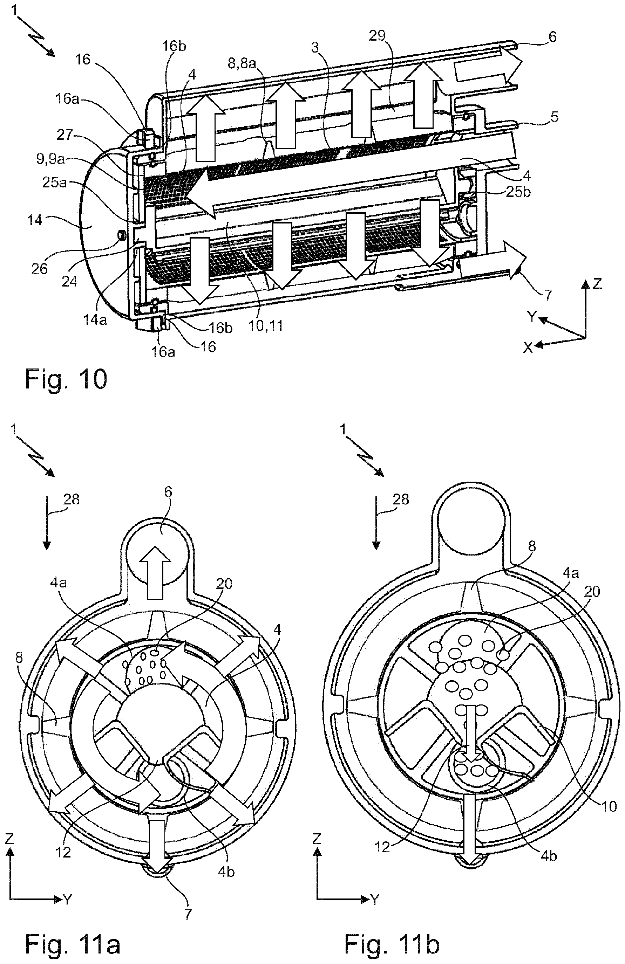

Ein erstes äußeres Element 14 des Filterelements 3 ist rotierbar an dem Gehäuse 2 der Filtrationseinrichtung 1 angeordnet. Dieses erste äußere Element 14 ist derart mit dem inneren Element 10 verbunden, dass dieses mittels des ersten äußeren Elements 14 rotierbar ist. D.h. durch eine Rotation des ersten äußeren Elements 14 kann die Rotation des inneren Elements 10 angetrieben werden. Eine Rotation des ersten äußeren Elements 14 kann beispielsweise durch eine händische Bewegung erfolgen. Vorliegend umfasst das äußere Element 14 eine becherartige Aufnahme 14a. Diese becherartige Aufnahme 14a ragt in die vordere Aufnahme 25a beziehungsweise in den Durchbruch oder in die Bohrung des Frontelements 27 hinein und nimmt gleichzeitig den vorderen Rotationszapfen 24 auf. Dies ist in Figur 10 ersichtlich. Die becherartige Aufnahme 14a ist relativ zu der vorderen Aufnahme 25a rotierbar. Weiterhin ist ein Verbindungselement 26 vorgesehen, mittels welchem das äußere Element 14 mit dem inneren Element 10 insbesondere mit dem Rotationszapfen 24 starr verbunden ist. Das Verbindungselement 26 kann ein Stift, eine Niete, eine Schraube oder ähnliches sein. Selbstverständlich sind auch anderweitige Verbindungen zwischen dem äußeren Element 14 und dem inneren Element 10 denkbar.

Die Winkelelemente 11 erstrecken sich entlang der Längsachse X über die im Wesentlichen gesamte Länge des inneren Hohlraums 4. Ebenfalls erstrecken sich die Winkelelemente 11 entlang der Breitenachse Y über die im Wesentlichen gesamte Breite des inneren Hohlraums 4. Die Winkelelemente 11 enden vorzugsweise nahe an der inneren Oberfläche 9a des Filtersiebs 9, berühren diese jedoch nicht. Ein Winkelelement 11 umfasst zwei Schenkel, welche in einen Winkel α einschließen. Der Winkel α liegt in einem Bereich zwischen 45° und 135° vorzugsweise bei ca. 90°. Zwischen den zwei Winkelelementen 11 ist ein Spalt 12 vorgesehen. Der Spalt 12 erstreckt sich entlang der Längsachse X zwischen den beiden Endstücken 23 und beabstandet die beiden Winkelelemente 11 beziehungsweise die gegenüberliegenden Schenkel der beiden Winkelelement 11 entlang der Breitenachse Y.

Das innere Element 10 trennt den inneren Hohlraum 4 in einen oberen Bereich 4a und einen unteren Bereich 4b. Während des Pumpvorgangs befindet sich ein Großteil der Mikroplastikteilchen- und fasern 20 in dem oberen Bereich 4a des inneren Hohlraums 4. Das Wasser tritt dabei durch das Filtersieb 9 radial nach außen. Dies ist in den Figuren 10 und 11a dargestellt. Während des Pumpvorgangs tritt das Wasser lediglich über das erste Abflusselement 6 aus der Filtrationseinrichtung 1 aus. Nach Beendigung des Pumpvorgangs gelangen die Mikroplastikteilchen- und fasern 20 durch den Spalt 12 in den unteren Bereich 4b des inneren Hohlraums 4. Dies erfolgt durch die Wirkung der Gravitationskraft, dargestellt in Fig. 11a, 11b mit Pfeil 28. Die Ausgestaltung der Winkelelemente 11 stellt dabei eine Art Führung der Mikroplastikteilchen- und fasern 20 zu dem Spalt 12 hin dar. Ferner erfolgt nach Beendigung des Pumpvorgangs der Abfluss des gefilterten Wassers durch das zweite Abflusselement 7, welches entlang der Höhenachse Z unter dem Filterelement 3 angeordnet ist. Die Mikroplastikteilchen- und fasern 20 sammeln sich somit in dem unteren Bereich 4b des inneren Hohlraums. Durch die Anordnung des inneren Elements 10 über dem unteren Bereich 4b sind die Mikroplastikteilchen- und fasern 20 überwiegend in diesem Bereich 4b gefangen. Auch bei einem weiteren Pumpvorgang gelangt nur ein geringer Teil aus dem unteren Bereich 4b des inneren Hohlraum in den oberen Bereich 4a.

Das innere Element 10 umfasst weiterhin ein Lippenelement 13, welches die innere Oberfläche 9a des Filtersiebs 9 kontaktiert. Das Lippenelement 13 ist im Wesentlichen bogenartig oder doppelbogenartig ausgestaltet. Weiterhin weist das Lippenelement 13 eine gewisse Elastizität auf, um einen entsprechenden Kontakt mit der inneren Oberfläche 9a des Filtersiebs 9 zu gewährleisten. Das Lippenelement erstreckt sich entlang der Längsachse X entlang der gesamten Längserstreckung des inneren Hohlraums 4.

Durch Rotationsbewegung des ersten äußeren Elements 14 wird das Lippenelement 13 entlang der inneren Oberfläche 9a des Filtersiebs 9 bewegt. Hierdurch werden die an der inneren Oberfläche 9a haftenden Mikroplastikteilchen- und fasern 20 von dieser entfernt und in dem unteren Bereich 4b gesammelt.

Das Filterelement 3 ist aus dem Gehäuse 2 entnehmbar. Hierzu weist das Gehäuse 2 der Filtrationseinrichtung 1 zumindest ein Aufnahmeelement 15 auf, in welchem das Filterelement 3 aufgenommen ist. Das Aufnahmeelement 15 kann als eine umlaufende Auf-/Anlagefläche ausgebildet sein, auf/an welcher die Trägerelemente 8c auf-/ anliegen. Ferner weist das Gehäuse 2 einen Aufnahmeraum 29 auf, in welchem das Filterelement 3 angeordnet ist. Der Aufnahmeraum 29 ist fluidisch mit den ersten Abflusselement 6 und dem zweiten Abflusselement 7 verbunden und ansonsten wasserdicht zu der Umgebung ausgestaltet. Die Trägerelemente 8c und/oder das zumindest eine Aufnahmeelement 15 können weiterhin Gleit- und/oder Rastelemente umfassen, welche ein Aus- und Einführen erleichtern sowie eigenen gewissen Halt des Filterelements 3 gewährleisten.

Ferner ist ein Verriegelungsmechanismus 16 vorgesehen, welcher das Filterelement 3 in dem Gehäuse 2 der Filtrationseinrichtung 1 fixiert. Der vorliegende Verriegelungsmechanismus 16 umfasst eine Verriegelungslasche 16a, welche an dem Gehäuse 2 angeordnet ist oder mit diesem integral ist. In dieser Lasche 16a kann ein Verriegelungsvorsprung 16b, welcher an dem äußeren Element 14 angeordnet ist, sein, oder mit diesem integral durch eine Rotation des äußeren Elements 14 eingeschoben werden. Vorzugsweise umfasst der Verriegelungsmechanismus 16 mehrere Verriegelungslaschen 16a und mehrere Verriegelungsvorsprünge 16b. Diese sind entlang einer Umfangsrichtung U des äußeren Elements 14 verteilt angeordnet. Das äu-ßere Element 14 ist im Wesentlichen becherartig ausgebildet. Es umfasst ein scheibenartig ausgestaltetes Frontelement 27, an welches ein sich entlang der Längsachse X erstreckender Kragen angeformt ist. An diesem Kragen ist der oder sind die Verriegelungsvorsprung(e) 16b angeordnet. Zwischen dem Kragen und dem Verriegelungsvorsprung 16b ist ein Winkel von ca. 90° vorgesehen.

Der Verriegelungsmechanismus 16 wird durch eine Rotation des äußeren Elements 14 entriegelt. Gleichzeitig wird durch eine solche Rotation das Lippenelement 13 über die innere Oberfläche 9a des Filtersiebs 9 bewegt. Nach der Sammlung der Mikroplastikteilchen- und fasern 20 kann nach der Entnahme des Filterelements 3 dieses auf eine einfache Art und Weise gereinigt werden. Somit kann eine äußerst einfach und effektive Entleerung der Filtrationseinrichtung 1 bereitgestellt werden.

Eine weitere Ausführungsform ist in den Figuren 12 bis 18 dargestellt. Merkmale dieser Filtrationseinrichtung 1, welche denen der zuvor beschriebenen Ausführungsform entsprechen, werden nicht im Einzelnen wiederholt. Lediglich die Abweichungen werden im Folgenden beschrieben. Der grundlegende Unterschied besteht in der Ausgestaltung des inneren Elements 10. Das Filterelement 3 ist im Wesentlichen gleich zu der zuvor beschriebenen Ausführungsform ausgestaltet.

Das innere Element 10 ist helixartig ausgebildet. Das helixartig ausgebildete innere Element 10, 17 ist derart in dem inneren Hohlraum 4 angeordnet, dass eine äußere Kontaktfläche 18 des helixartig ausgebildeten inneren Elements 10, 17 die innere Oberfläche 9a des Filtersiebs 9 kontaktiert. Das helixartig ausgebildete innere Element 10, 17 umfasst ein stabförmiges Wellenelement 30, um welche sich ein Helixelement 31 windet. In einem entlang der Längsachse X vorderen Abschnitt 17a des helixartig ausgebildeten inneren Elements 10, 17 ist das eine Helixelement 31 mit dem Wellenelement 30 verbunden. Die Kontaktfläche 18 ist der äußere Rand des Helixelements 31, welcher sich entlang einer Dicke des Helixelements 31 erstreckt. Diese liegt vollflächig an der inneren Oberfläche 9a an.

Ferner ist ein zweites äußeres Element 19 an dem Gehäuse 2 angeordnet. Dieses zweite äu-ßere Element 19 ist becherartig ausgebildet. Durch eine Rotation des helixartig ausgebildeten inneren Elements 10, 17 werden die gefilterten sich in dem inneren Hohlraum befindlichen Mikroplastikteilchen- und fasern 20 entlang der Längsachse X nach vorzu zu dem zweiten äußeren Element 19 und schließlich in das in das zweite äußere Element 19 befördert.

Weiterhin ist eine Antriebseinrichtung 21 vorgesehen, mittels welcher die Rotation des helixartig ausgebildeten inneren Elements 10, 17 angetrieben wird. Die Antriebseinrichtung 21 kann beispielsweise ein elektrischer Stellantrieb sein. Dabei ist die die Antriebseinrichtung 21 mittels einer Übertragungseinrichtung 22 mit dem helixartig ausgebildeten inneren Element 10, 17 wirkverbunden. Vorliegend ist die Übertragungseinrichtung 22 als ein Getriebe ausgebildet. Denkbar sind selbstverständlich auch anderweitige Übertragungseinrichtungen 22.

Das Wellenelement 30 ist an einer hinteren Aufnahme 25b der Trägerstruktur 8 gelagert. Diese hintere Aufnahme 25b ist becherartig ausgebildet und mittels zumindest einem dritten Rippenelement 8d mit dem hinteren ringartig ausgebildeten Trägerelement 8c verbunden. Das Wellenelement 30 weist an seinem entlang der Längsachse X hinteren Ende einen hinteren Abschnitt 30b auf, welcher einen kleineren Durchmesser als der vordere Abschnitt 30a hat. Der hintere Abschnitt 30b ragt durch eine Bohrung der becherartig ausgebildeten hinteren Aufnahme 25b. An dem hinteren Abschnitt 30b ist ein erstes Zahnrad der Übertragungseinrichtung 22 angeordnet, welches mit einem zweiten Zahnrad der Übertragungseinrichtung 22 kämt. Dabei ist das zweite Zahnrad der Übertragungseinrichtung 22 mit der Antriebseinrichtung 21 wirkverbunden. Durch diese Anordnung wird das Wellenelement 30 in der hinteren Aufnahme 25b gelagert. Gleichzeitig wird die Rotation des Wellenelements 30 über dessen hinteren Abschnitt 30b angetrieben. Das Zuleitungselement 5 ist entlang der Höhenachse Z über der hinteren Aufnahme 25b angeordnet. Das zu filternde Wasser kann somit ungehindert in den inneren Hohlraum 4 gelangen.

Das Wellenelement 30 ist weiterhin in einer vorderen Aufnahme 25a gelagert. Die vordere Aufnahme 25a ist becherartig ausgebildet und in einem zweiten Frontelement 32 angeordnet. Das zweite Frontelement 32 ist mit dem vorderen Trägerelement 8c verbunden. Ferner ist in dem zweiten Frontelement 32 eine Durchgangsöffnung 33 vorgesehen, durch welche die Mikroplastikteilchen- und fasern 20 in das becherartig ausgebildete zweite äußere Element 19 befördert werden. Vorzugsweise verdeckt in einer ersten Position des helixartig ausgebildeten innere Elements 10, 17 ein Abschnitt des Helixelements 31 die Durchgangsöffnung 33, so dass während des Pumpvorgangs so gut wie kein Wasser in das zweite äußere Element 19 gelangt.

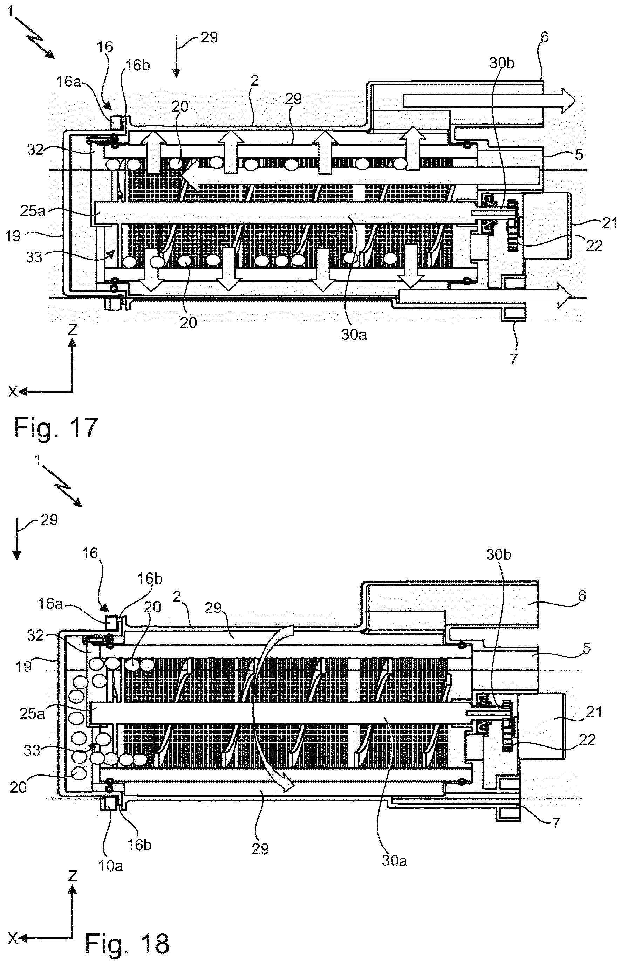

In den Figuren 17 und 18 ist die Funktion der Filtrationseinrichtung 1 dargestellt. Während des Pumpvorgangs gelangt das zu filternde Wasser in den inneren Hohlraum 4 und tritt dann durch das Filtersieb 9 radial nach außen in den Aufnahmeraum 29. Das Wasser kann lediglich durch das erste Abflusselement 6 aus der Filtrationseinrichtung 1 treten. Nach Beendigung des Pumpvorgangs fließt das Wasser aufgrund der Gravitationskraft nach unten zu dem zweiten Abflusselement 7, wobei durch dieses nun eine Ableitung des gefilterten Wasser möglich ist. Sobald das Wasser aus dem Filterelement 3 entwichen ist, lagern sich die Mikroplastikteilchen- und fasern 20 an der inneren Oberfläche 9a des Filtersiebs 9 ab. Dabei lagert sich ein Großteil der Mikroplastikteilchen- und fasern 20 an der entlang der Höhenachse Z unteren inneren Oberfläche 9a des Filtersiebs 9 ab. Durch Aktivieren der Antriebseinrichtung führt das helixartig ausgebildete innere Element 10, 17 eine vorbestimmte Anzahl von Rotationen aus. Die in dem inneren Hohlraum 4 sich befindenden Mikroplastikteilchen- und fasern 20 werden somit in das becherartig ausgebildete zweite äußere Element 19 befördert. Vorzugsweise befindet sich das helixartig ausgebildete innere Element 10, 17 nach der vorbestimmten Anzahl von Rotationen wieder in seiner ersten Position.

Das becherartig ausgebildete zweite äußere Element 19 kann von dem Gehäuse 2 entfernt werden um dieses zu Entleeren. Dabei ist ein Verriegelungsmechanismus 16 vorgesehen, welcher das Filterelement 3 in dem Gehäuse 2 der Filtrationseinrichtung 1 fixiert. Der vorliegende Verriegelungsmechanismus 16 umfasst eine Verriegelungslasche 16a, welche an dem Gehäuse 2 angeordnet ist oder mit diesem integral ist. In diese Verriegelungslasche 16a kann ein Verriegelungsvorsprung 16b, welcher an dem zweiten äußeren Element 19 angeordnet ist oder mit diesem integral ist, durch eine Rotation des zweiten äußeren Elements 19 eingeschoben werden. Vorzugsweise umfasst der Verriegelungsmechanismus 16 mehrere eine Verriegelungslaschen 16a und mehrere Verriegelungsvorsprünge 16b. Diese sind entlang einer Umfangsrichtung U des zweiten äußeren Elements 19 verteilt angeordnet. Das zweite äußere Element 19 ist im Wesentlichen becherartig ausgebildet. Es umfasst ein scheibenartig ausgestaltetes Frontelement 27, an welches ein sich entlang der Längsachse X erstreckender Kragen angeformt ist. An diesem Kragen ist der oder sind die Verriegelungsvorsprung(e) 16b angeordnet. Zwischen dem Kragen und dem Verriegelungsvorsprung 16b ist ein Winkel von ca. 90° vorgesehen.

In Figur 19 ist ein Haushaltsgerät 100 in Form einer Waschmaschine dargestellt. Das Haushaltsgerät 100 umfasst ein Gehäuse 101 und einen darin vorgesehenen Laugenbehälter 102. Das Gehäuses 101 umfasst eine vordere Seite, welche eine Verschlussvorrichtung für den Laugenbehälter 102 aufweist, ein Anzeige- und Bedienfeld sowie eine Waschmittelschublade. Die Filtrationseinrichtung 1 ist in einem oberen Bereich einer vorderen Seite des Gehäuses 101 vorgesehen und somit für einen Nutzer leicht zugänglich. Mögliche Anordnungen sind in Figur 19 dargestellt. Das Haushaltsgerät 100 umfasst vorzugsweise lediglich eine Filtrationseinrichtung 1.

Das wasserführende Haushaltsgerät 100 umfasst eine Steuerungseinrichtung 105, welche unter anderem die Filtrationseinrichtung 1 ansteuert. Weiterhin umfasst das wasserführendes Haushaltsgerät 100 umfasst eine Pumpeinrichtung 103, welche Wasser aus dem Laugenbehälter 102 zu der zumindest einen Filtrationseinrichtung 1 befördert. Hierzu ist eine Zuleitung, welche mit dem Zuleitungselement 5 verbunden ist, vorgesehen. Auch die Abführung des gefilterten Wassers aus dem ersten Abflusselement 6 erfolgt mittels der Pumpeinrichtung 103. Die Steuerungseinrichtung 105 steuert ebenso die Pumpeinrichtung 103, wie in der Prinzipschaltskizze in Figuren 20a und 20b ersichtlich. Ferner ist das erste Abflusselement 6 mittels einer ersten Ableitung fluidisch mit dem Abfluss 104 des wasserführenden Haushaltsgeräts 100 und/oder dem Laugenbehälter 102 verbunden. Das zweite Abflusselement 7 ist über eine Bypassleitung mit einem Abfluss 104 des wasserführenden Haushaltsgeräts 100 verbunden. In dem zweiten Abflusselement 7 und/oder in der Bypassleitung ist eine Zusatzpumpeinrichtung 108 vorgesehen, mittels welcher das Wasser aus dem zweiten Abflusselement 7 beziehungsweise dem Filterelement 3 beziehungsweise der Filtrationseinrichtung 1 förderbar ist.

Während des Pumpvorgangs der Pumpeinrichtung 103 ist die Zusatzpumpeinrichtung 108 nicht aktiviert, so dass über das zweite Abflusselement 7 kein Wasser abgeleitet werden kann. Das gefilterte Wasser wird demnach vorteilhafterweise während des Pumpvorgangs lediglich über das erste Abflusselement 6 abgeleitet. Nach Beendigung des Pumpvorgangs der Pumpeinrichtung 103 wird die Zusatzpumpvorrichtung 108 aktiviert. Somit kann nach Beendigung des Pumpvorgangs vorteilhafterweise das gefilterte Wasser lediglich über das zweite Abflusselement 7 abgeleitet werden, da ein Abfließen über das erste Abflusselement 6 nicht mehr erfolgt.

Weiterhin kann zumindest eine erste Sensoreinrichtung 106 vorgesehen sein, mittels welcher ein Entleerungserfordernis des Filtrationseinrichtung 1 detektierbar ist. Diese Sensoreinrichtung 106 kann auf vielfältige Weise ausgebildet sein, beispielsweise kann ein Durchflusssensor vorgesehen sein, welcher den Durchfluss durch das zweite Abflusselement 7 und/der die damit verbundene Ableitung detektiert. Dies könnte bei der Ausführungsform nach den Figuren 1 bis 11b sinnvoll sein. Bei der Ausführungsform nach den Figuren 12 bis 18 könnte ein optischer Sensor 106 vorgesehen sein, welche die Menge an Mikroplastikteilchen und -fasern 20 in dem zweiten äußeren Element 19 detektiert. Bei Detektion des Entleerungserfordernisses übermittelt die Steuerungseinrichtung 105 einen Befehl an eine Hinweisvorrichtung 110, welche einen Hinweis an den Benutzer ausgibt. In Figur 20a ist ein Prinzipschaltbild dargestellt, welche für die Ausführungsform nach den Figuren 1 bis 11b gegeben sein könnte. In Figur 20b ist ein Prinzipschaltbild dargestellt, welche für die Ausführungsform nach den Figuren 12 bis 18 gegeben sein könnte. In dieser Darstellung ist ersichtlich, dass die Steuerungseinrichtung 105 ebenso die Antriebseinrichtung 21 ansteuert. Dies erfolgt vorzugsweise nach Beendigung des Pumpvorgangs, und vorteilhafterweise nachdem das verbleibende Wasser durch das zweite Abflusselement 7 ausgetreten ist. Vorzugsweise steuert die Steuerungseinrichtung 105 die Antriebseinrichtung 21 derart an, dass eine Vorbestimmte Anzahl an Rotationen des helixartig ausgebildeten inneren Elements 10, 17 durchgeführt werden.

Durch die Filtrationseinrichtung 1 wird eine effektive Filterung von Mikroplastikteilchen und -fasern 20 erreicht. Ferner entfällt durch die einfache Reinigungsmöglichkeit Filtrationseinrichtung 1 ein aufwändiges Ersetzten von Mikroplastikfiltern.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer, in einzelnen oder in unterschiedlichen Figuren gezeigter Merkmale ergeben können.

### Bezugszeichenliste

- 1: Filtrationseinrichtung
- 2: Gehäuse
- 3: Filterelement
- 4: innerer Hohlraum des Filterelements
- 4a: oberer Bereich des inneren Hohlraums
- 4b: unterer Bereich des inneren Hohlraums
- 5: Zuleitungselement
- 6: erstes Abflusselement
- 7: zweites Abflusselement
- 8: Trägerstruktur
- 8a: erste Rippenelemente
- 8b: zweite Rippenelemente
- 8c: Trägerelemente
- 8d: dritte Rippenelemente
- 9: Filtersieb
- 9a: innere Oberfläche des zumindest einen Filtersiebs
- 9b: äußere Oberfläche des zumindest einen Filtersiebs
- 10: inneres Element
- 11: Winkelelemente
- 12: Spalt
- 13: Lippenelement
- 14: erstes äußeres Element
- 14a: becherartige Aufnahme
- 15: Aufnahmeelement
- 16: Verriegelungseinrichtung
- 16a: Verriegelungslasche
- 16b: Verriegelungsvorsprung
- 17: helixartig ausgebildetes inneres Element
- 17a: vorderer Abschnitt des helixartig ausgebildeten innere Elements
- 18: äußere Kontaktfläche des helixartig ausgebildeten inneren Elements
- 19: zweites äußeres Element
- 20: Mikroplastikteilchen und -fasern
- 21: Antriebseinrichtung
- 22: Übertragungseinrichtung
- 23: Endstück
- 24: Rotationszapfen
- 25a: vordere Aufnahme der Trägerstruktur
- 25b: hintere Aufnahme der Trägerstruktur
- 26: Verbindungselement
- 27: Frontelement
- 28: Pfeil
- 29: Aufnahmeraum
- 30: Wellenelement
- 30a: vorderer Abschnitt des Wellenelements
- 30b: hinterer Abschnitt des Wellenelements
- 31: Helixelement
- 32: zweites Frontelement
- 33: Durchgangsöffnung
- 100: Haushaltsgerät
- 101: Gehäuse
- 102: Laugenbehälter
- 103: Pumpeinrichtung
- 104: Abfluss des Haushaltsgeräts
- 105: Steuerungseinrichtung
- 106: erste Sensoreinrichtung
- 108: Zusatzpumpeinrichtung
- 110: Hinweisvorrichtung
- U: Umfangsrichtung
- X: Längsachse der Filtrationseinrichtung
- Y: Breitenachse der Filtrationseinrichtung
- Z: Höhenachse der Filtrationseinrichtung
- X': Längsachse des Haushaltsgeräts
- Y': Breitenachse des Haushaltsgeräts
- Z`: Höhenachse des Haushaltsgeräts
- α: Winkel

## Patentansprüche

1. Filtrationseinrichtung (1) insbesondere zur Filtration von Mikroplastik für ein wasserführendes Haushaltsgerät (100),
**dadurch gekennzeichnet, dass**
die Filtrationseinrichtung (1) ein Gehäuse (2) umfasst, in welchem ein Filterelement (3) angeordnet ist, wobei das Filterelement (3) derart ausgestaltet ist, dass es einen inneren Hohlraum (4) umschließt, welcher mit einem Zuleitungselement (5) fluidisch verbunden ist, wobei ein erstes Abflusselement (6) entlang der Höhenachse Z über dem Filterelement (3) angeordnet ist, wobei ein zweites Abflusselement (7) entlang der Höhenachse Z unter dem Filterelement (3) angeordnet ist.

2. Filtrationseinrichtung (1) nach Anspruch 1
**dadurch gekennzeichnet, dass**
das erste Abflusselement (6) geeignet und dafür vorgesehen ist lediglich während eines Pumpvorgangs des Haushaltsgeräts (100) das gefilterte Wasser abzuleiten, wobei das zweite Abflusselement (7) geeignet und dafür vorgesehen ist lediglich nach Beendigung eines Pumpvorgangs des Haushaltsgeräts (100) das gefilterte Wasser abzuleiten.

3. Filtrationseinrichtung (1) nach Anspruch 1 oder 2
**dadurch gekennzeichnet, dass**
das erste Filterelement (3) im Wesentlichen hohlzylindrisch ausgebildet ist, wobei das erste Filterelement (3) im Wesentlichen einen kreisförmigen Querschnitt aufweist, wobei das erste Filterelement (3) eine Trägerstruktur (8) aufweist, an welcher zumindest ein Filtersieb (9) angeordnet ist.

4. Filtrationseinrichtung (1) nach einem der vorhergehenden Ansprüche
**dadurch gekennzeichnet, dass**
innerhalb des inneren Hohlraums (4) ein sich entlang einer Längsachse X erstreckendes inneres Element (10) rotierbar angeordnet ist, welches zumindest abschnittsweise eine innere Oberfläche (9a) des zumindest einen Filtersiebs (9) kontaktiert, wobei mittels einer Rotation des inneren Elements (10) gefilterte Mikroplastikteilchen- und fasern (20) gesammelt werden.

5. Filtrationseinrichtung (1) nach Anspruch 4
**dadurch gekennzeichnet, dass**
das innere Element (10) zwei sich entlang der Längsachse X erstreckende Winkelelemente (11) umfasst, wobei zwischen den zwei Winkelelementen (11) ein Spalt (12) vorgesehen ist, wobei das innere Element (10) ein Lippenelement (13) umfasst, welches eine innere Oberfläche (9a) des Filtersiebs (9) kontaktiert, wobei ein erstes äußeres Element (14) des Filterelements (3) rotierbar an dem Gehäuse (2) der Filtrationseinrichtung (1) angeordnet ist, wobei das erste äußere Element (14) derart mit dem inneren Element (10) verbunden ist, dass dieses mittels des ersten äußeren Elements (14) rotierbar ist.

6. Filtrationseinrichtung (1) nach einem der Ansprüche 1 bis 5
**dadurch gekennzeichnet, dass**
das Filterelement (3) aus dem Gehäuse (2) entnehmbar ist, wobei das Gehäuse (2) der Filtrationseinrichtung (1) zumindest ein Aufnahmeelement (15) umfasst, welches dafür vorgesehen ist, das Filterelement (3) aufzunehmen und zu lagern, wobei ein Verriegelungsmechanismus (16)vorgesehen ist, welcher das Filterelement (3) in dem Gehäuse (2) der Filtrationseinrichtung (1) fixiert.

7. Filtrationseinrichtung (1) nach Anspruch 4
**dadurch gekennzeichnet, dass**
das innere Element (10) helixartig ausgebildet ist, wobei eine äußere Kontaktfläche (18) des helixartig ausgebildeten inneren Elements (10, 17) eine innere Oberfläche (9a) des Filtersiebs (9) kontaktiert, wobei ein zweites äußeres Element (19) an dem Gehäuse (2) angeordnet ist, wobei das zweite äußere Element (19) becherartig ausgebildet ist, wobei eine Rotation des helixartig ausgebildeten inneren Elements (10, 17) die gefilterten Mikroplastikteilchen- und fasern (20) in das zweite äußere Element (19) befördert.

8. Filtrationseinrichtung (1) nach Anspruch 4
**dadurch gekennzeichnet, dass**
eine Antriebseinrichtung (21) vorgesehen ist, mittels welcher die Rotation des helixartig ausgebildeten inneren Elements (10, 17) antreibt, wobei die Antriebseinrichtung (21) mittels einer Übertragungseinrichtung (22) mit dem helixartig ausgebildeten inneren Element (10, 17) wirkverbunden ist.

9. Wasserführendes Haushaltsgerät (100) umfassend ein Gehäuse (101), zumindest einen Laugenbehälter (102) und zumindest eine Filtrationseinrichtung (1) nach einem der vorhergehenden Ansprüche.

10. Wasserführendes Haushaltsgerät (100) nach Anspruch 6
**dadurch gekennzeichnet, dass**
das wasserführendes Haushaltsgerät (100) eine Pumpeinrichtung (103) umfasst, welche Wasser aus dem Laugenbehälter (102) zu der zumindest einen Filtrationseinrichtung (1) befördert, wobei das erste Abflusselement (6) fluidisch mit dem Laugenbehälter (102) verbunden ist, wobei das zweite Abflusselement (7) über eine Bypassleitung mit einem Abfluss (104) des wasserführenden Haushaltsgeräts (100) fluidisch verbunden ist.

11. Wasserführendes Haushaltsgerät (100) nach einem der Ansprüche 6 bis 7
**dadurch gekennzeichnet, dass**
das wasserführende Haushaltsgerät (100) eine Steuerungseinrichtung (105) umfasst, welche die Filtrationseinrichtung (1) ansteuert.
